# EUROPEAN PATENT SPECIFICATION

(11) **EP 1 371 149 B1**
(45) Date of publication and mention of the grant of the patent: **08.06.2011**
(21) Application number: 03705375.8
(22) Date of filing: 21.02.2003
(51) Int. Cl.: H04B 7/10, H04B 7/06, H04B 7/08

(54) **RADIO COMMUNICATION APPARATUS AND METHOD**
VERFAHREN UND VORRICHTUNG ZUR FUNKKOMMUNIKATION
APPAREIL DE RADIOCOMMUNICATIONS ET PROCEDE CORRESPONDANT

(30) Priority: 21.02.2002 JP 2002044169; 18.02.2003 JP 2003040209
(43) Date of publication of application: 17.12.2003
(73) Proprietor: Panasonic Corporation, Kadoma-shi Osaka 571-8501 (JP)
(72) Inventor: MIYANO, Kentaro, Yokohama-shi, Kanagawa 231-0851 (JP)
(74) Representative: Grünecker, Kinkeldey, Stockmair & Schwanhäusser Anwaltssozietät
(86) International application number: PCT/JP2003/001895
(87) International publication number: WO 2003/071715

(56) References cited:
- US-B1- 6 243 565
- PATENT ABSTRACTS OF JAPAN vol. 1997, no. 10, 31 October 1997 (1997-10-31) & JP 09 162842 A (HITACHI DENSHI LTD), 20 June 1997 (1997-06-20)

## Description

### Technical Field

The present invention relates to a radio communication apparatus and radio communication method.

### Background Art

In recent years, radio terminal apparatuses such as cellular phones have increased in number, resulting in such an important issue that how efficiently frequencies that are finite resources should be used, and to cope with the issue, a large number of methods are considered.

Representative examples include providing a base station with a plurality of antennas to divide an area that the base station covers into a plurality of sectors, and an adaptive array antenna that decreases interference with radio signals incoming from different directions.

Further, in order to use frequencies efficiently, a method of switching polarizations is considered. As a radio communication system for switchingpolarizations, such a radio access system is considered that polarizations used in communications are switched between transmission and reception,thereby minimizingfrequency resources used in a plurality of sectors without decreasing time slots used in communications per subscriber, and it is thus possible to prevent the signal interference between sectors (for example, Japanese Laid-Open Patent Publication 2001-169342).

However, when two or more radio terminal apparatuses using the same frequency as the same direction exist, conventional radio communication systems have a problem that interference occurs between signals transmitted in the same direction from terminals using the same frequency in a base station. Especially in the CDMA system, interference of the radio terminal apparatuses the spreading factor is different from has the problem.

US 6 243 565 B1 relates to a method and apparatus for transmitting communication signals using frequency and polarization diversity. When coupled to a radio transmitter to form a portion thereof, signal diversity is created to overcome multi-path fading. A plurality of antennas are freely selectable to be coupled to receive bursts of a communication signal, modulated to be transmitted on any of selected carriers. By altering the carriers upon which the bursts of the communication signal are transmitted and the spatially-separated antennas used to transduce the bursts of the communication signal, both the transmission space diversity and frequency diversity is created. Polarization diversity is further provided by utilization of dual-polarized antennas.

### Disclosure of Invention

It is an object of the present invention to provide a radio communication apparatus and a radio communication method for decreasing interference between signals transmitted in the same direction from radio terminal apparatuses using the same frequency.

The object is achieved by switching polarizations used in communications corresponding to speed of communication or other factors in a radio base station or radio terminal apparatuses, and thereby reducing the interference between radio signals from radio terminal apparatuses.

### Brief Description of Drawings

FIG.1 is a block diagram illustrating configurations of a radio base station and radio terminal apparatus according to a first embodiment of the present invention;
FIG.2 is a block diagram illustrating configurations of a transmitting section of a radio base station according to the first embodiment of the present invention;
FIG.3 is a block diagram illustrating configurations of a receiving section of a radio base station according to the first embodiment of the present invention;
FIG.4 is a block diagram illustrating configurations of a radio base station and radio terminal apparatus according to a second embodiment of the present invention;
Fig. 5 is a block diagram illustrating configurations of a radio base station and radio terminal apparatus according to a third embodiment of the present invention;
FIG.6 is a block diagram illustrating configurations of a radio base station and radio terminal apparatus according to a fourth embodiment of the present invention;
FIG.7 is a block diagram illustrating configurations of a radio base station and radio terminal apparatus according to a fifth embodiment of the present invention;
FIG.8 is a diagram illustrating an example of radio terminal apparatus according to the fifth embodiment;
FIG.9 is a diagram illustrating examples of usage type according to the fifth embodiment;
FIG.10 is a block diagram illustrating a configuration of a radio terminal apparatus according to a sixth embodiment of the present invention; and
FIG.11 is a block diagram illustrating a configuration of a radio base station according to a seventh embodiment of the present invention.

### Best Mode for Carrying Out the Invention

The inventor of the present invention noted that the interference between signals of different polarizations is smaller than the interference between signals of same polarizations, and reached the present invention.

That is, it is a subject matter of the present invention that when radio terminal apparatuses using the same frequency coexist in the same direction, using differences between the radio terminal apparatuses in speed of communication, usage type, modulation scheme, etc, radio signals of different polarizations are used in radio terminal apparatuses using different speed of communications, usage types, modulation schemes, etc., and thus the interference between the signals is reduced to improve frequency use efficiency.

Embodiments of the present invention will be described below with reference to accompanying drawings.

### (First embodiment)

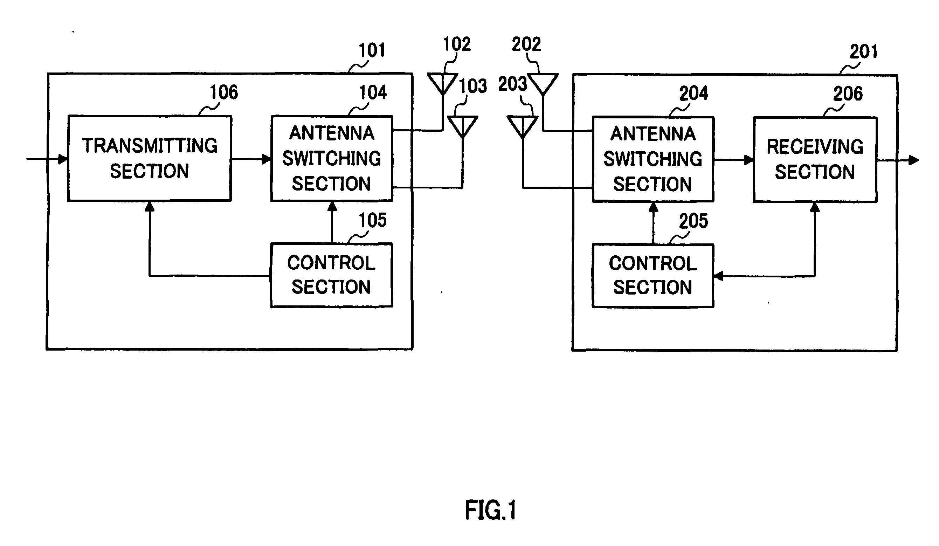

This embodiment explains a case where polarizations used in transmission and reception are the same with the speed of communication before modulation and after demodulation in a radio communication system according to the present invention. FIG.1 is a block diagram illustrating configurations of a radio base station and radio terminal apparatus according to the first embodiment of the present invention.

In FIG.1, radio base station 101 has antennas 102 and 103, antenna switching section 104, control section 105, and transmitting section 106. Radio terminal apparatus 201 has antennas 202 and 203, antenna switching section 204, control section 205, and receiving section 206.

Radio signals of different polarizations are communicated using antennas 102 and 103. Similarly, radio signals of different polarizations are communicated using antennas 202 and 203.

Radio signals of the same polarizations are communicated using antennas 102 and 202. Similarly, radio signals of the same polarizations are communicated using antennas 103 and 203.

A case will be described herein that antennas 102 and 202 are for vertical polarization, while antennas 103 and 203 are for horizontal polarization.

Control section 105 instructs a speed of communication of a transmission signal to transmitting section 106. When the speed of communication of a transmission signal is not less than a predetermined value, control section 105 outputs to antenna switching section 104 an instruction for outputting the transmission signal output from transmitting section 106 to antenna 102 for vertical polarization. Meanwhile, when the speed of communication of a transmission signal is less than the predetermined value, control section 105 outputs to antenna switching section 104 an instruction for outputting the transmission signal output from transmitting section 106 to antenna 103 for horizontal polarization.

Transmitting section 106modulates a control signal for identifying a speed of communication instructed from control section 105, and converts the modulated signal into a radio frequency to output to antenna switching section 104. Further, transmitting section 106 modulates a transmission signal at the speed of communication instructed from control section 105, and converts the modulated signal into a radio frequency to output to antenna switching section 104. For example, transmitting section 106 modulates a transmission signal in either modulation scheme of BPSK, QPSK, 8PSK and 16QAM corresponding to the speed of communication instructed from control section 105. In the case of CDMA, transmitting section 106 spreads a transmission signal using a spreading factor corresponding to the speed of communication instructed from control section 105.

According to the instruction from control section 105, antenna switching section 104 outputs the transmission signal output from transmitting section 106 to either antenna 102 or 103. In other words, when the speed of communication of a transmission signal is not less than a predetermined value, antenna switching section 104 outputs the transmission signal output from transmitting section 106 to antenna 102 for vertical polarization. Meanwhile, when the speed of communication of a transmission signal is less than the predetermined value, antenna switching section 104 outputs the transmission signal output from transmitting section 106 to antenna 103 for horizontal polarization.

Antenna 102 transmits the transmission signal output from antenna switching section 104 in vertical polarization. Antenna 103 transmits the transmission signal output from antenna switching section 104 in horizontal polarization.

Radio terminal apparatus 201 that receives radio signals transmitted from radio base station 101 will be described below.

Antenna 202 receives radio signals principally in vertical polarization to output to antenna switching section 204. Antenna 203 receives radio signals principally in horizontal polarization to output to antenna switching section 204.

According to an instruction from control section 205, antenna switching section 204 outputs a received signal received in either antenna 202 or 203 to receiving section 206.

Control section 205 determines a speed of communication between radio base station 101 and radio terminal apparatus 201 from the received signal demodulated in receiving section 206. Then, when the speed of communication is not less than a predetermined value, control section 205 outputs to antenna switching section 204 an instruction for outputting a signal received in antenna 202 to receiving section 206. Meanwhile, when the speed of communication is less than the predetermined value, control section 205 outputs to antenna switching section 204 an instruction for outputting a signal received in antenna 203 to receiving section 206.

Receiving section 206 converts the frequency of the received signal output from antenna switching section 204 into the baseband frequency, and demodulates the converted received signal at the speed of communication instructed from control section 205.

Radio base station 101 and radio terminal apparatus 201 each with the above-mentioned configuration perform communications in polarizations varied with speed of communication. In this case, although it is the composition which transmits from the radio base station 101 and is received with radio terminal apparatus 201, when it transmits from radio terminal apparatus 201 and the radio base station 101 receives, the transmitting section 106 should be made into a receiving section, and it should just make receiving section 206 a transmitting section.

The operations of radio base station 101 and radio terminal apparatus 201 will be described below.

Radio base station 101 switches polarizations of antennas used in communications with speed of communication. For example, in high-rate communications control section 105 outputs a signal for switching to antenna 102 for vertical polarization to antenna switching section 104, while in low-speed communications, outputting a signal for switching to antenna 103 for horizontal polarization to antenna switching section 104.

Similarly, radio terminal apparatus 201 switches polarizations of antennas used in communications with speed of communication. For example, in high-rate communications control section 205 outputs a signal for switching to antenna 202 for vertical polarization to antenna switching section 204, while in low-speed communications, outputting a signal for switching to antenna 203 for horizontal polarization to antenna switching section 204.

When performing high-rate communications, radio base station 101 and radio terminal apparatus 201 communicate with each other using antennas 102 and 202 each for vertical polarization, while when performing low-speed communications, communicating with each other using antennas 103 and 203 each for horizontal polarization.

The speed of communication is determined, for example, in the case of CDMA, using spreading factors being different depending on the speed of communication, or in the case of CDMA, TDMA or FDMA, radio base station 101 and radio terminal apparatus 201 communicate the signal which judges transmission speed, before starting communication, or using the length of redundant code composing a frame or slot being different depending on the speed of communication. Further, methods are available of adding a signal for determining a speed of communication to a frame or slot, and of determining the speed of communication using a share rate of a code, time slot and frequency used in the communication, .

Next, the case where the spreading factor is changed by the CDMA system is explained in detail.

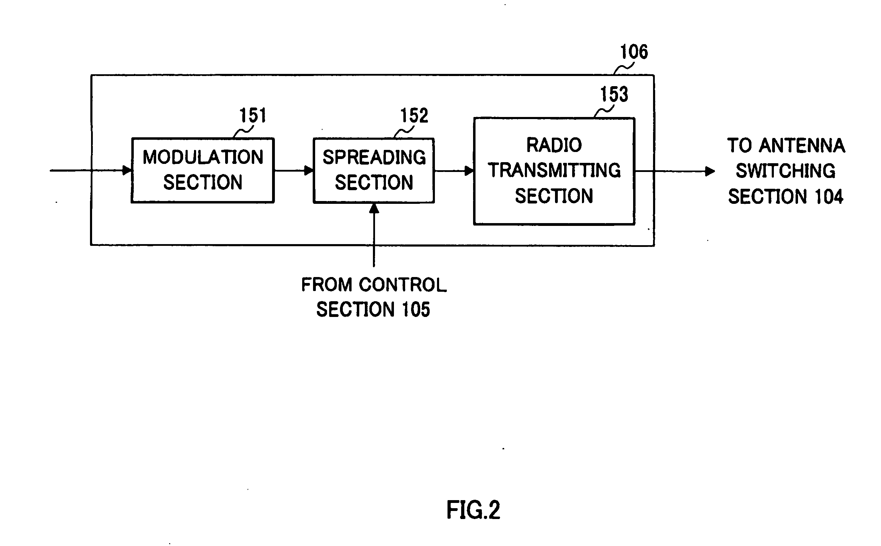

FIG.2 is a block diagram illustrating configurations of a transmitting section of a radio base station according to the first embodiment of the present invention. In FIG.2, transmitting section 106 has modulation section 151, spreading section 152, and radio transmitting section 153.

Control section 105 of Fig. 1 notifies the spreading factor to spreading section 152. Modulation section 151 modulates Modulation section 151 modulates the transmission signal to output to spreading section 152. Spreading section 152 spreads the transmission signal at the spreading factor that the control section 105 directs, and output it to radio transmitting section 153. Radio transmitting section 153 converts the transmission signal into a radio frequency to output to antenna switching section 104.

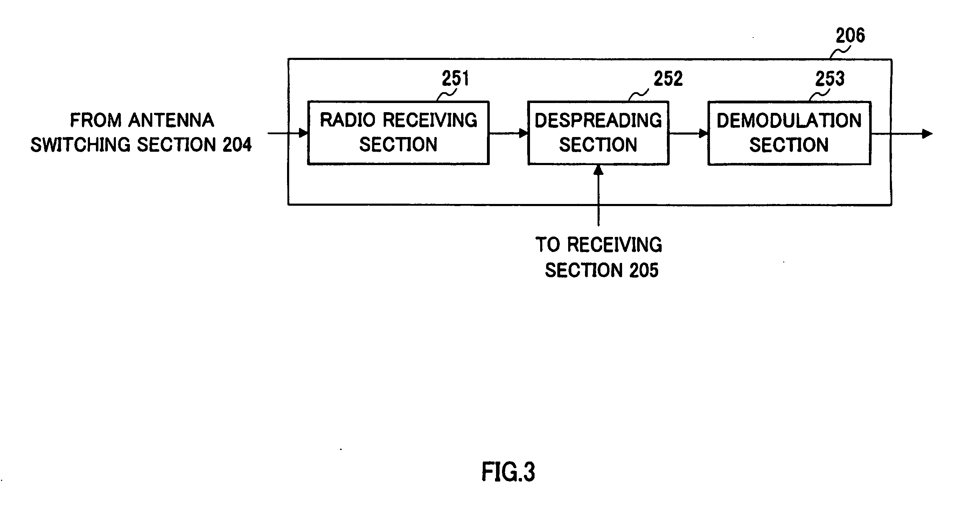

Next, a reception side is explained. FIG.3 is a block diagram illustrating configurations of a receiving section of a radio terminal apparatus according to the first embodiment of the present invention. In FIG.3, receiving section 206 has radio receiving section 251, despreading section 252, and demodulation section 253.

Control section 205 of Fig. 1 notifies the spreading factor to despreading section 252. Radio receiving section 251 converts the reception signal outputted from antenna switching section 204 into a baseband frequency to output to despreading section 252. Despreading section 252 despreads the reception signal at the spreading factor that the control section 205 directs, and output it to demodulation section 253.demodulation section 253 demodulates the reception signal.

In this way, according to the radio base station and radio terminal apparatus of this embodiment, polarizations of antennas used in communications are switched with speed of communication, whereby it is possible to reduce interference between radio terminal apparatuses using different speed of communications when such radio terminal apparatuses exist, and thus, the frequency use efficiency rises.

In addition, polarizations of antennas used in communications are not limited to two types, vertical and horizontal polarizations, and further, not limited particularly as long as polarizations are mutually orthogonal. Moreover, it may be possible to use a single antenna or array antenna that switches polarizations, and the type of polarization of an antenna used in low-speed communications or high-speed communications is not limited particularly.

### (Second embodiment)

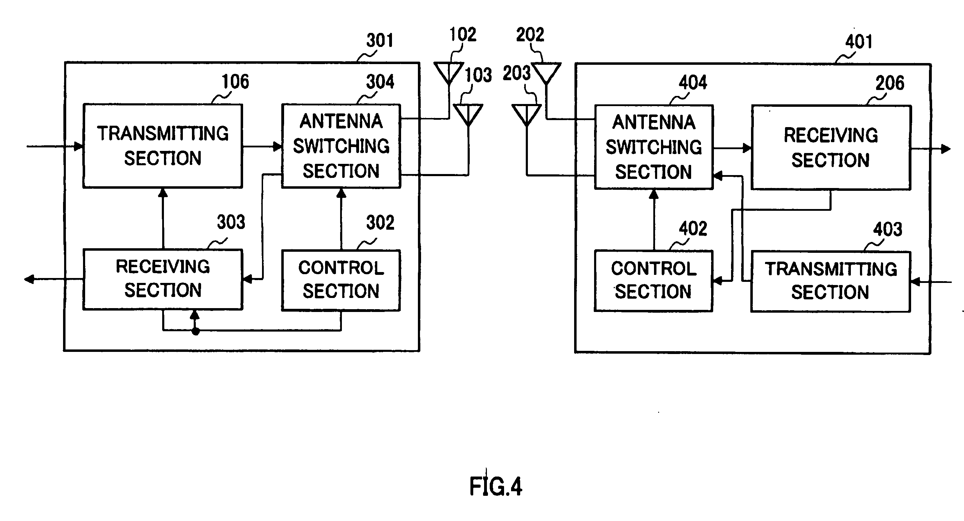

This embodiment explains a case where in a radio communication system according to the present invention, different polarizations are used between the downlink where a radio base station transmits signals to a radio terminal apparatus and the uplink where the radio terminal apparatus transmits signals to the radio base station, and polarizations used in transmission and reception are varied with speed of communication. FIG.4 is a block diagram illustrating configurations of a radio base station and radio terminal apparatus according to the second embodiment of the present invention. In addition, the sections with the same functions as in FIG. 1 are assigned the same reference numerals to omit specific descriptions thereof.

Radio base station 301 in FIG. 4 has control section 302, receiving section 303 and antenna switching section 304, while radio terminal apparatus 401 has control section 402, transmitting section 403 and antenna switching section 404 . Radio base station 301 and radio terminal apparatus 401 mutually perform communications using different polarizations between the uplink and downlink, and in this respect, differ from radio base station 101 and radio terminal apparatus 201 in FIG.1, respectively.

In FIG.4, control section 302 instructs a speed of communication of transmission and reception signals to transmitting section 106 and receiving section 303. When the speed of communication of a transmission signal is not less than a predetermined value, control section 302 outputs to antenna switching section 304 an instruction for outputting the transmission signal output from transmitting section 106 to antenna 102 for vertical polarization and an instruction for outputting a received signal received in antenna 103 to receiving section 303.

Meanwhile, when the speed of communication of a transmission signal is less than the predetermined value, control section 302 outputs to antenna switching section 304 an instruction for outputting the transmission signal output from transmitting section 106 to antenna 103 for horizontal polarization and an instruction for outputting a received signal received in antenna 102 to receiving section 303.

Transmitting section 106 modulates a control signal for identifying a speed of communication instructed from control section 302, and converts the modulated signal into a radio frequency to output to antenna switching section 304. Further, transmitting section 106 modulates a transmission signal at the speed of communication instructed from control section 302, and converts the modulated signal into a radio frequency to output to antenna switching section 304.

According to the instruction from control section 302, antenna switching section 304 outputs the transmission signal output from transmitting section 106 to either antenna 102 or 103. In other words, when the speed of communication of a transmission signal is not less than a predetermined value, antenna switching section 304 outputs the transmission signal output from transmitting section 106 to antenna 102 for vertical polarization, while outputting a received signal received in antenna 103 to receiving section 303.

Meanwhile, when the speed of communication of a transmission signal is less than the predetermined value, antenna switching section 304 outputs the transmission signal output from transmitting section 106 to antenna 103 for horizontal polarization, while outputting a received signal received in antenna 102 to receiving section 303.

Antenna 102 transmits the transmission signal output from antenna switching section 304 in vertical polarization, while outputting a received signal received principally in vertical polarization to antenna switching section 304. Antenna 103 transmits the transmission signal output from antenna switching section 304 in horizontal polarization, while outputting a received signal received principally in horizontal polarization to antenna switching section 304.

Receiving section 303 converts the frequency of the received signal output from antenna switching section 304 into the baseband frequency, and demodulates the converted received signal at the speed of communication instructed from control section 302.

A configuration will be described below of radio terminal apparatus 401 that communicates with radio base station 301.

Transmitting section 403 modulates a transmission signal at the speed of communication instructed from control section 402, and converts the modulated signal into a radio frequency to output to antenna switching section 404.

According to an instruction from control section 402, antenna switching section 404 outputs a received signal received in either antenna 202 or 203 to receiving section 206.

Antenna 202 transmits the transmission signal output from antenna switching section 404 in vertical polarization, while receiving a radio signal principally in vertical polarization to output to antenna switching section 404. Antenna 203 transmits the transmission signal output from antenna switching section 404 in horizontal polarization, while receiving a radio signal principally in horizontal polarization to output to antenna switching section 404.

Control section 402 determines a speed of communication between radio base station 301 and radio terminal apparatus 401 from the received signal demodulated in receiving section 206. Then, when the speed of communication is not less than a predetermined value, control section 402 outputs to antenna switching section 404 an instruction for outputting a signal received in antenna 202 to receiving section 206, while outputting a transmission signal output from transmitting section 403 to antenna 203.

Meanwhile, when the speed of communication is less than the predetermined value, control section 402 outputs to antenna switching section 404 an instruction for outputting a signal received in antenna 203 to receiving section 206, while outputting a transmission signal output from transmitting section 403 to antenna 202.

Receiving section 206 converts the frequency of the received signal output from antenna switching section 404 into the baseband frequency, and demodulates the converted received signal at the speed of communication instructed from control section 402.

Radio base station 301 and radio terminal apparatus 401 each with the above-mentioned configuration perform communications in different polarizations varied with speed of communication, while using different polarizations between the uplink and downlink to communicate. The operations of radio base station 301 and radio terminal apparatus 401 will be described below.

In the case of high-speed communications, radio base station 301 and radio terminal apparatus 401 mutually communicate in vertical polarization over the downlink using antennas 102 and 202 each for vertical polarization, while communicating in horizontal polarization over the uplink using antennas 103 and 203 each for horizontal polarization.

Meanwhile, in the case of low-speed communications, radio base station 301 and radio terminal apparatus 401 mutually communicate in horizontal polarization over the downlink using antennas 103 and 203 each for horizontal polarization, while communicating in vertical polarization over the uplink using antennas 102 and 202 each for vertical polarization.

In this way, according to the radio base station and radio terminal apparatus of this embodiment, polarizations of antennas used in communications are switched with speed of communication in each of the uplink and downlink, whereby it is possible to reduce interference between radio terminal apparatuses using different speed of communications when such radio terminal apparatuses exist, and thus, the frequency use efficiency rises. The speed of communication may be determined in the same way as in the first embodiment.

In addition, as in the first embodiment, polarizations of antennas used in communications are not limited to two types, vertical and horizontal polarizations, and further, not limited particularly as long as polarizations are mutually orthogonal. Moreover, it may be possible to use a single antenna or array antenna that switches polarizations, and the type of polarization of an antenna used in low-speed or high-speed communications on the uplink or downlink channel is not limited particularly.

### (Third embodiment)

This embodiment explains a case where polarizations used in communications are varied with usage type in a radio communication system according to the present invention. Specifically, a case will be described where a user uses two usage types, speech communications and data communications.

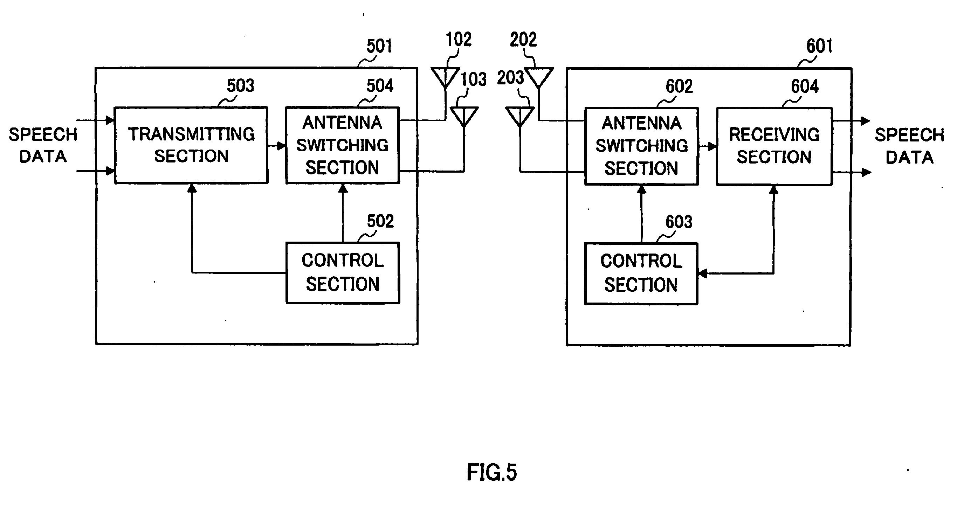

FIG.5 is a block diagram illustrating configurations of a radio base station and radio terminal apparatus according to the third embodiment of the present invention. In addition, the sections with the same functions as in FIG.1 are assigned the same reference numerals to omit specific descriptions thereof.

Radio base station 501 in Fig. 5 has control section 502, transmitting section 503 and antenna switching section 504, performs communications using different polarizations between communications with different transmission conditions such as speech communications and data communications, and in this respect, differs from radio base station 101 in FIG.1.

Control section 502 instructs transmitting section 503 on whether to transmit speech signal or data signal. When a speech signal is transmitted, control section 502 outputs to antenna switching section 504 an instruction for outputting a transmission signal output from transmitting section 503 to antenna 102 for vertical polarization. Meanwhile, when data signal is transmitted, control section 502 outputs to antenna switching section 504 an instruction for outputting a transmission signal output from transmitting section 503 to antenna 103 for horizontal polarization. The speech signal may be the same transmission speed as data signal, and each can apply it to communication from which a use form differs.

Transmitting section 503 modulates a control signal for recognizing whether a signal to transmit is speech or data, and converts the modulated signal into a radio frequency to output to antenna switching section 504. Further, transmitting section 503 modulates a transmission signal, and converts the modulated signal into a radio frequency to output to antenna switching section 504.

According to the instruction from control section 502, antenna switching section 504 outputs the transmission signal output from transmitting section 503 to either antenna 102 or 103. In other words, when transmitting a speech signal, antenna switching section 504 outputs the transmission signal output from transmitting section 503 to antenna 102 for vertical polarization, while when transmitting data signal, outputting the transmission signal output from transmitting section 503 to antenna 103 for horizontal polarization.

Antenna 102 transmits the transmission signal output from antenna switching section 504 in vertical polarization. Antenna 103 transmits the transmission signal output from antenna switching section 504 in horizontal polarization.

A configuration will be described below of radio terminal apparatus 601 that receives radio signals transmitted from radio base station 501.

Radio terminal apparatus 601 in FIG . 5 has antenna switching section 602, control section 603, and receiving section 604, performs communications using different polarizations between communications with different transmission conditions such as speech communications and data communications, and in this respect, differs from radio terminal apparatus 201 in FIG.1.

Antenna 202 receives a radio signal principally in vertical polarization to output to antenna switching section 602. Antenna 203 receives a radio signal principally in horizontal polarization to output to antenna switching section 602.

According to an instruction from control section 603, antenna switching section 602 outputs a received signal received in either antenna 202 or 203 to receiving section 604.

Control section 603 determines whether speech signal or data signal is transmitted in communications between radio base station 501 and radio terminal apparatus 601 from the received signal demodulated in receiving section 604. Then, when a speech signal is transmitted in the communications, control section 603 outputs to antenna switching section 602 an instruction for outputting a signal received in antenna 202 to receiving section 604. Meanwhile, when data signal is transmitted in the communications, control section 603 outputs to antenna switching section 602 an instruction for outputting a signal received in antenna 203 to receiving section 604.

Receiving section 604 converts the frequency of the received signal output from antenna switching section 602 into the baseband frequency, and demodulates the converted received signal to speech signal or data signal instructed from control section 603.

Radio base station 501 and radio terminal apparatus 601 each with the above-mentioned configuration perform communications in polarizations varied with usage type. In this case, although it is the composition which transmits from the radio base station 501 and is received with radio terminal apparatus 601, when it transmits from radio terminal apparatus 601 and the radio base station 501 receives, the transmitting section 503 should be made into a receiving section, and it should just make receiving section 604 a transmitting section. The operations of radio base station 501 and radio terminal apparatus 601 will be described below.

Radio base station 501 switches polarizations of antennas used in communications with usage type. For example, in the case of speech communications control section 502 outputs a signal for switching to antenna 102 for vertical polarization to antenna switching section 504, while in the case of data communications, outputting a signal for switching to antenna 103 for horizontal polarization to antenna switching section 504. Similarly, radio terminal apparatus 601 switches polarizations of antennas used in communications with usage type. For example, in the case of speech communications control section 603 outputs a signal for switching to antenna 202 for vertical polarization to antenna switching section 602, while in the case of data communications, outputting a signal for switching to antenna 203 for horizontal polarization to antenna switching section 602.

When performing speech communications, radio base station 501 and radio terminal apparatus 601 mutually communicate using antennas 102 and 202 each for vertical polarization, while when performing data communications, communicating using antennas 103 and 203 each for horizontal polarization.

When communications are performed according to the constitution of the second embodiment, as in the first embodiment, for example, in the case of speech communications, radio base station 501 and radio terminal apparatus 601 mutually communicate over the downlink using antennas 102 and 202 each for vertical polarization, while communicating over the uplink using antennas 103 and 203 each for horizontal polarization.

Meanwhile, in the case of data communications, radio base station 501 and radio terminal apparatus 601 mutually communicate over the downlink using antennas 103 and 203 each for horizontal polarization, while communicating over the uplink using antennas 102 and 202 each for vertical polarization.

In this way, according to the radio base station and radio terminal apparatus of this embodiment, polarizations of antennas used in communications are switched with usage type in the radio terminal apparatus, whereby it is possible to reduce interference between radio terminal apparatuses using different usage types when such radio terminal apparatuses exist, and thus, the frequency use efficiency rises.

The usage type may be determined by judging whether or not a mode is a data communication mode, or judging whether or not a speech signal is output to a microphone or speaker, inclination of radio terminal apparatus, or adding a signal for identifying a usage type prior to communications.

In addition, as in the first and second embodiments, polarizations of antennas used in communications are not limited to two types, vertical and horizontal polarizations, and further, not limited particularly as long as polarizations are mutually orthogonal. Moreover, it may be possible to use a single antenna or array antenna that switches polarizations, the type of polarization of an antenna used in speech or data communications is not limited particularly, and further, the type of polarization of an antenna used in speech or data communications over the uplink or downlink is not limited particularly.

### (Fourth embodiment)

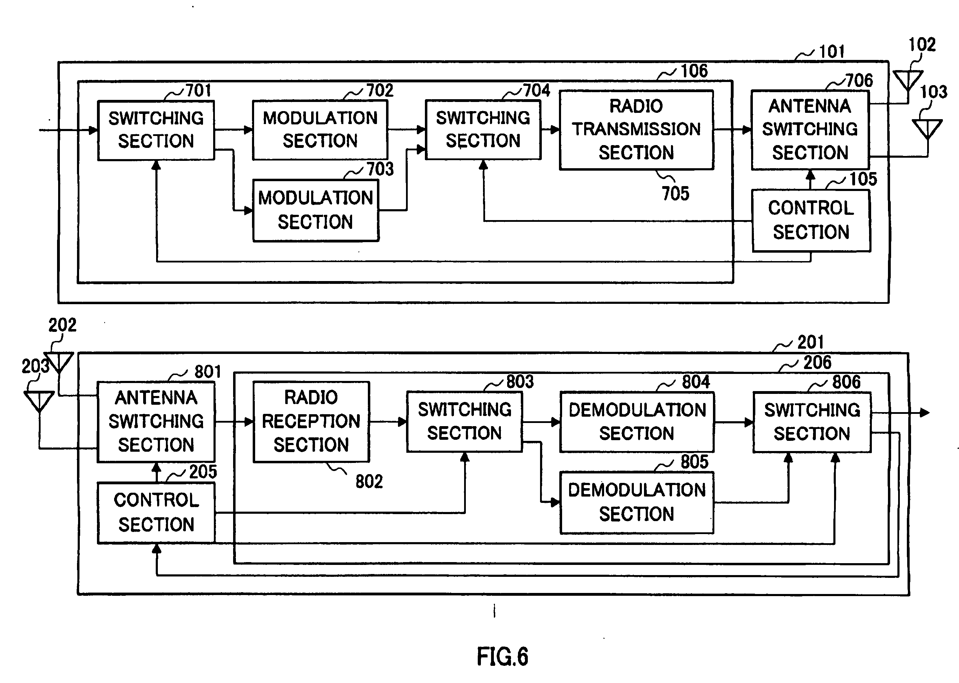

This embodiment explains a case where in a radio communication system according to the present invention, polarizations used in communications are varied with modulation scheme. FIG. 6 is a block diagram illustrating configurations of a radio base station and radio terminal apparatus according to the fourth embodiment of the present invention. In addition, the sections with the same functions as in FIG.1 are assigned the same reference numerals to omit specific descriptions thereof.

Transmitting section 106 in radio base station 101 has switching section 701, modulation sections 702 and 703, switching section 704 and radio transmission section 705. Radio base station 101 in FIG.6 has antenna switching section 706, varies the polarization used in communications with modulation scheme, and in this respect, differs from radio base station 101 in FIG.1_{.}

Further, receiving section 206 in radio terminal apparatus 201 has radio reception section 802, switching section 803, demodulation sections 804 and 805 and switching section 806. Further, radio terminal apparatus 201 in FIG.6 has antenna switching section 801, varies the polarization used in communications with modulation scheme, and in this respect, differs from radio terminal apparatus 201 in FIG.1.

Herein, a case will be described where modulation section 702 and demodulation section 804 correspond to QPSK, modulation section 703 and demodulation section 805 correspond to 16QAM, and thus two types of modulation schemes are used. 16QAM has a larger information transmission amount per symbol than QPSK. Further, when the amount of information transmissions per one symbol is the same, and modulation scheme is differing, it can apply. For example, the signal modulated by ASK of two values and BPSK , respectively may be transmitted and received by different polarization. Control section 105 instructs a modulation scheme of a transmission signal to transmitting section 106. When the modulation scheme is QPSK, control section 105 outputs to antenna switching section 706 an instruction for outputting the transmission signal output from radio transmission section 705 to antenna 102 for vertical polarization. Meanwhile, when the modulation scheme of the transmission signal is 16QAM, control section 105 outputs to antenna switching section 706 an instruction for outputting the transmission signal output from radio transmission section 705 to antenna 103 for horizontal polarization.

In transmitting section 106, according to the instruction from control section 105, switching section 701 outputs the transmission signal to either modulation section 702 or 703. Specifically, switching section 701 outputs the transmission signal to modulation section 702 when the modulation scheme is QPSK, while outputting the transmission signal to modulation section 703 when the modulation scheme of a transmission signal is 16QAM.

Modulation section 702 modulates the transmission signal in QPSK to output to switching section 704. Modulation section 703 modulates the transmission signal in 16QAM to output to switching section 704.

According to the instruction from control section 105, switching section 704 selects the transmission signal modulated in either modulation section 702 or 703 to output to radio transmission section 705. Specifically, when the modulation scheme is QPSK, switching section 704 outputs the transmission signal modulated in modulation section 702 to radio transmission section 705, while when the modulation scheme of the transmission signal is 16QAM, outputting the transmission signal modulated in modulation section 703 to radio transmission section 705.

Radio transmission section 705 converts the frequency of the transmission signal output from switching section 704 into the radio frequency to output to antenna switching section 706.

According to the instruction from control section 105, antenna switching section 706 outputs the transmission signal to either antenna 102 or 103. Specifically, when the modulation scheme is QPSK, antenna switching section 706 outputs the transmission signal output from radio transmission section 705 to antenna 102 for vertical polarization, while when the modulation scheme of the transmission signal is 16QAM, outputting the transmission signal output from radio transmission section 705 to antenna 103 for horizontal polarization.

A configuration will be described below of radio terminal apparatus 201 that receives radio signals transmitted from radio base station 101.

According to an instruction from control section 205, antenna switching section 801 outputs a received signal received in either antenna 202 or 203 to radio reception section 802. Specifically,-when receiving a QPSK-modulated signal, antenna switching section 801 outputs a received signal received in antenna 201 to radio reception section 802, while when receiving a 16QAM-modulated signal, outputting a received signal received in antenna 203 to radio reception section 802.

Radio reception section 802 converts the frequency of the received signal into the baseband frequency to output to switching section 803.

According to the instruction from control section 205, switching section 803 outputs the received signal output from radio reception section 802 to either demodulation section 804 or 805. Specifically, switching section 803 outputs the received signal output from radio reception section 802 to demodulation section 804 when the modulation scheme is QPSK, while outputting the received signal output from radio reception section 802 to demodulation scheme 805 when the modulation scheme of the transmission signal is 16QAM.

Demodulation section 804 demodulates the received signal in QPSK to output to switching section 806. Demodulation section 805 demodulates the received signal in 16QAM to output to switching section 806.

According to the instruction from control section 205, switching section 806 selects the received signal output from either demodulation section 804 or 805 to output. Specifically, when the modulation scheme is QPSK, switching section 806 selects the received signal output from demodulation section 804, while when the modulation scheme is 16QAM, selecting the received signal output from demodulation section 805.

Control section 205 determines a modulation scheme used in communications between radio base station 101 and radio terminal apparatus 201 from the received signal demodulated in receiving section 206. When the modulation scheme is QPSK, control section 205 outputs to antenna switching section 801 an instruction for outputting a signal received in antenna 202 to radio reception section 802, while when the modulation scheme is 16QAM, outputting to antenna switching section 801 an instruction for outputting a signal received in antenna 203 to radio reception section 802. Further, control section 205 notifies receiving section 206 of information of the modulation scheme. In this case, although it is the composition which transmits from the radio base station 101 and is received with radio terminal apparatus 201, when it transmits from radio terminal apparatus 201 and the radio base station 101 receives, the transmitting section 106 should be made into a receiving section, and it should just make receiving section 206 a transmitting section.

The operations of radio base station 101 and radio terminal apparatus 201 each with the above-mentioned configuration will be described below.

Radio-base station 101 switches polarizations of antennas used in communications with modulation scheme in the communications. For example, in the case of QPSK, control section 105 outputs a signal for switching to antenna 102 for vertical polarization to antenna switching section 706, while in the case of 16QAM, outputting a signal for switching to antenna 103 for horizontal polarization to the antenna switching section 706. Further, in the case of QPSK control section 105 outputs a signal for switching to modulation section 702 to switching sections 701 and 704, while in the case of 16QAM, outputting a signal switching to modulation section 703 to switching sections 701 and 704.

Similarly, radio terminal apparatus 201 switches polarizations of antennas used in communications with modulation scheme in the communications. For example, in the case of QPSK, control section 205 outputs a signal for switching to antenna 202 for vertical polarization to antenna switching section 801, while in the case of 16QAM, outputting a signal for switching to antenna 203 for horizontal polarization to the antenna switching section 801. Further, in the case of QPSK control section 205 outputs a signal for switching to modulation section 804 to switching sections 803 and 806, while in the case of 16QAM, outputting a signal switching to modulation section 805 to switching sections 803 and 806.

In this way, when performing communications using QPSK, radio base station 101 and radio terminal apparatus 201 mutually communicate using antennas 102 and 202 for vertical polarization, while when performing communications using 16QAM, communicating using antennas 103 and 203 each for horizontal polarization.

Further, when this embodiment is combined with the second embodiment to perform communications, in the case where communications are performed using QPSK, radio base station 101 and radio terminal apparatus 201 mutually communicate over the downlink using antennas 102 and 202 each for vertical polarization, while communicating over the uplink using antennas 103 and 203 each for horizontal polarization. Meanwhile, in the case where communications are performed using 16QAM, radio base station 101 and radio terminal apparatus 201 mutually communicate over the downlink using antennas 103 and 203 each for horizontal polarization, while communicating over the uplink using antennas 102 and 202 each for vertical polarization.

Thus, according to the radio base station and radio terminal apparatus of this embodiment, polarizations of antennas used in communications are switched with modulation scheme used in the communications, whereby it is possible to reduce interference between radio terminal apparatuses using different modulation schemes when such radio terminal apparatuses exist, and thus, the frequency use efficiency rises.

The modulation scheme may be determined, for example, by communicating a signal for identifying the modulation scheme prior to communications, or adding a signal for identifying the modulation scheme to data signal.

It may be possible for switching sections 701, 704, 803 and 806 to switch modulation schemes in software as a software defined radio apparatus, and further radio base station 101 or radio terminal apparatus 201 may have a plurality of control sections 105 or 205, respectively.

In addition, as in the first and second embodiments, polarizations of antennas used in communications are not limited to two types, vertical and horizontal polarizations, and further, not limited particularly as long as polarizations are mutually orthogonal. Moreover, it may be possible to use a single antenna or array antenna that switches polarizations, the type of polarization of an antenna used in QPSK or 16QAM is not limited particularly, and further, the type of polarization of an antenna used in QPSK or 16QAM over the uplink or downlink is not limited particularly. Furthermore, types of modulation schemes used in communications are not limited particularly.

### (Fifth embodiment)

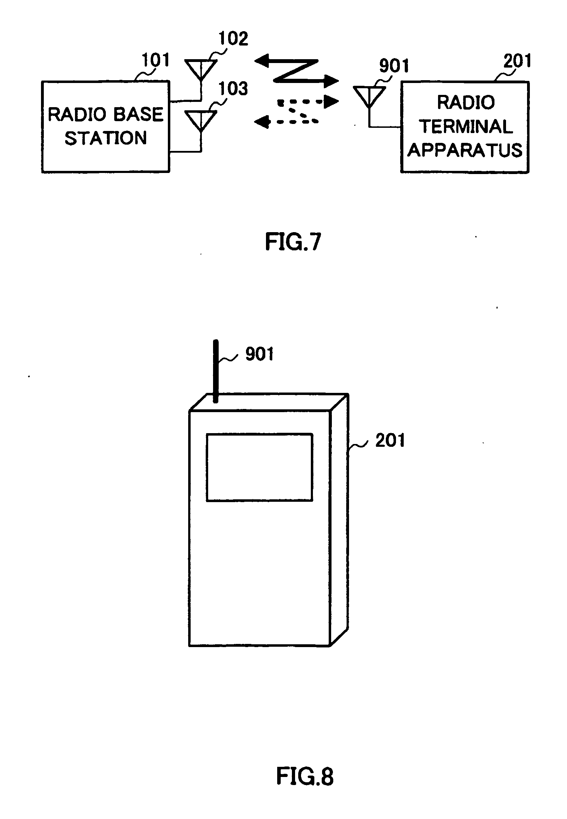

This embodiment explains a case where a radio terminal apparatus has an antenna for a single type of polarization in a radio communication system according to the present invention. FIG.7 is a block diagram illustrating a configuration of a radio terminal apparatus according to the fifth embodiment of the present invention.

A configuration of radio base station 101 is the same as that in the third embodiment, and has two antennas, 102 and 103, for different polarizations, antenna switching section 104 and control section 105. Radio terminal apparatus 201 has antenna 901.

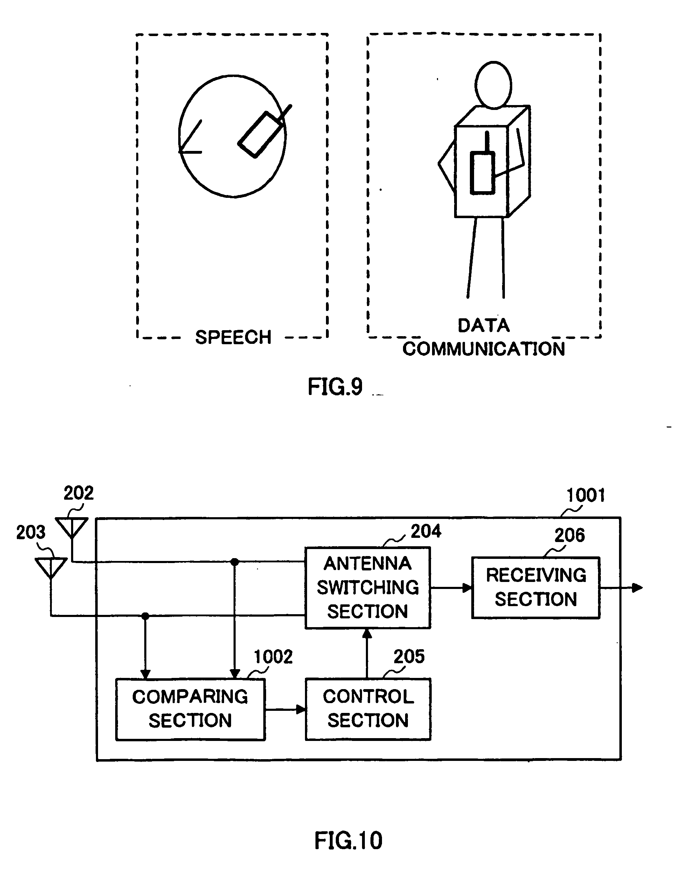

For example, when radio terminal apparatus 201 is a cellular phone having whip antenna 901 as shown in FIG. 8, since a user uses radio terminal apparatus 201 at a different tilt angle corresponding to usage type, speech or data communications as shown in FIG.9, whip antenna 901 accepts a large amount of horizontal component of polarization in speech communications, while accepting a large amount of vertical component of polarization in data communications.

When performing data communications, radio base station 101 and radio terminal apparatus 201 use antenna 102 for vertical polarization and whip antenna 901 to communicate, while when performing speech communication, using antenna 103 for horizontal polarization and whip antenna 901 to communicate.

In this way, according to the radio base station and radio terminal apparatus of this embodiment, by taking advantage that the component of polarization of an antenna used in communications varies with usage type of the radio terminal apparatus, it is possible to reduce interference between radio terminal apparatuses using different usage patters when such radio terminal apparatuses exist, and thus, the frequency use efficiency rises.

This embodiment is applicable to cases in the first and fourth embodiments when a user changes the tilt angle of radio terminal apparatus 201 corresponding to speed of communication and modulation scheme, respectively.

In addition, usage types of the radio terminal apparatus are not limited to speech and data communications, and further, not limited particularly as long as the component of polarization of an antenna is varied with usage type, polarizations of antennas used in the radio base station are not limited to two types, vertical and horizontal polarizations, and further, not limited particularly as long as polarizations are mutually orthogonal, it may be possible to use a single antenna or array antenna that switches polarizations, and a type of antenna used in the radio terminal apparatus is not limited particularly.

### (Sixth embodiment)

When it is possible to set a line-of-sight path between radio base station 101 and radio terminal apparatus 201 in FIG.1, a polarization plane of a transmitted signal is almost the same as a polarization plane of a received signal. However, when there is not a line-of-sight between radio base station 101 and radio terminal apparatus 201, since a polarization plane of a transmitted signal is not always the same as a polarization plane of a received signal, there arises a case that the sensitivity of communications remarkably deteriorates.

This embodiment explains a case where diversity effect is used in a radio communication system according to the present invention. FIG.10 is a block diagram illustrating a configuration of a radio terminal apparatus according to the sixth embodiment of the present invention. In addition, the sections with the same functions as in FIG.1 are assigned the same reference numerals to omit specific descriptions thereof.

Radio terminal apparatus 1001 in FIG.10 has comparing section 1002 to select a signal received in polarization with high reception sensitivity, and in this respect, differs from the radio terminal apparatus in FIG.1.

For example, a case will be described where communications are performed according to the first embodiment. In line-of-sight, radio base station 101 and radio terminal apparatus 201 perform high-speed communications using antennas 102 and 202 each for vertical polarization, while performing low-speed communications using antennas 103 and 203 for horizontal polarization. Then, when it becomes out-of-sight, at the time of high-speed communications, comparing section 1002 compares reception power of antenna 202 for vertical polarization with that of antenna 203 for horizontal polarization. When the reception sensitivity of antenna 203 for horizontal polarization is higher, comparing section 1002 instructs control section 205 so as to switch antennas used in communications from antenna 202 for vertical polarization to antenna 203 for horizontal polarization.

The control section 205 outputs the directions that output the signal received in the comparing section 1002 with the antenna whose receiving sensitivity was high to the antenna switching section 204. According to an instruction from control section 205, antenna switching section 204 outputs a received signal received in either antenna 202 or 203 to receiving section 206.

Receiving section 206 converts the frequency of the received signal output from antenna switching section 204 into the baseband frequency, and demodulates the converted received signal at the speed of communication instructed from control section 205.

Accordingly, radio base station 101 and radio terminal apparatus 1001 perform high-speed communications using antenna 102 for vertical polarization and 203 for horizontal polarization, and perform low-speed communications using antenna 103 for horizontal polarization and antenna 202 for vertical polarization.

In addition, this embodiment is applicable to the second, third or fourth embodiment.

In this way, according to the radio terminal apparatus of this embodiment, a signal received in polarization with high reception sensitivity is selected, and therefore, even when propagation environments change and the reception sensitivity remarkably deteriorates, it is possible to communicate excellently. Further, this embodiment is capable of being used in a radio base station.

### (Seventh embodiment)

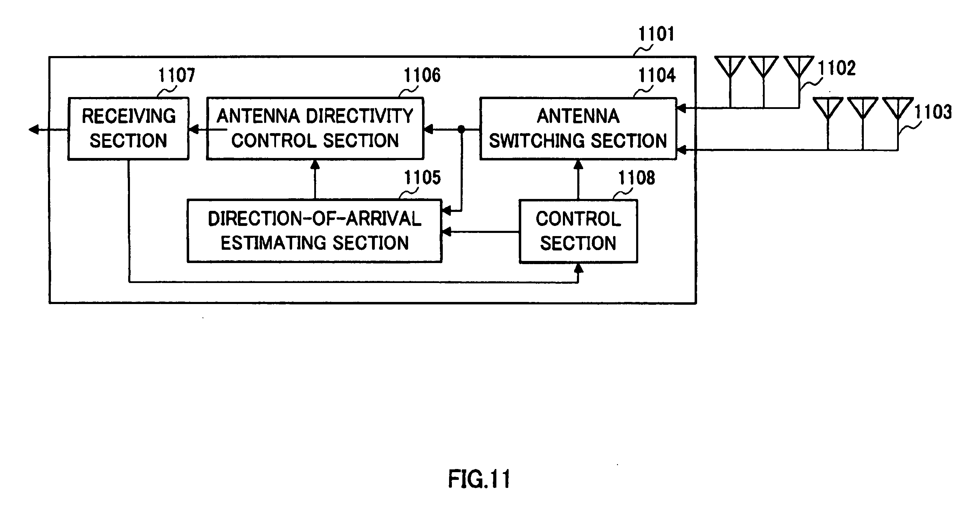

This embodiment explains a case of using an array antenna in a radio communication system according to the present invention. FIG.11 is a block diagram illustrating a configuration of a radio base station according to the seventh embodiment of the present invention.

In FIG.11, radio base station 1101 has antenna array 1102 and 1103, antenna switching section 1104, direction-of-arrival estimating section 1105, antenna directivity control section 1106, receiving section 1107, and control section 1108.

Radio base station 1101 in FIG.11 has antenna directivity control section 1106 and direction-of-arrival estimating section 1105, receives a radio signal using an antenna having the directivity for each polarization to reduce the interference, and in this respect, differs from radio base station 101 in FIG.1.

It is difficult to reduce the interference between radio terminal apparatus that exits in the same direction and use different speed of communications, usage types or modulation schemes. However, when terminals exist in different directions, it is possible to further enhancing the effect of reducing the interference due to polarization switching, by estimating directions of arrivals of a plurality of radio terminal apparatus in direction-or-arrival estimating section 1105, and based on the results estimated in direction-or-arrival estimating section 1105, controlling in antenna directivity control section 1106 so that array antenna 1102 or 1103 has an antenna pattern for canceling the interference.

Receiving section 1107 converts the frequency of the received signal output from antenna directivity control section 1106 into the baseband frequency, and demodulates the converted received signal. Moreover, receiving section 1107 takes out the information of polarizations used from a demodulation result, and outputs it to control section 1108. Control section 1108 determines a speed of communication from the demodulation result demodulated in receiving section 1107, and control section 1108 instructs antenna switching section 1104 on whether to receive polarizations of antenna array 1102 and 1103.

Thus, according to the radio base station and radio terminal apparatus of this embodiment, switching of polarizations of antennas is combined with an antenna pattern of an array antenna, and it is thereby possible to increase the interference canceling effect. Further, this embodiment is capable of being used in a radio terminal apparatus.

In addition, the present invention is not limited to the above-mentioned embodiments, and is capable of being carried into practice with various modifications thereof. For example, the above-mentioned embodiments explain cases where the present invention is carried into practice as a radio communication apparatus and method, but the present invention is not limited to such cases. The radio communication method is capable of being carried into practice as software.

For example, it may be possible that a program for executing the above-mentioned radio communication method is stored in ROM (Read Only Memory) in advance and executed by CPU (Central Processor Unit).

Further, it may be possible that a program for executing the above-mentioned radio communication method is stored in a computer-readable storage medium, the program stored in the storage medium is stored in RAM (Random Access Memory) in a computer, and the computer is operated according to the program.

As is apparent from the foregoing, according to the radio base station and radio terminal apparatus of the present invention, when radio terminal apparatususing the same frequency coexist in the same direction, by taking advantage of differences between the terminals in speed of communication, usage type, and/or modulation scheme and setting the radio terminal apparatus using different speed of communications, usage types and/or modulation schemes for different polarizations of radio signals, it is possible to reduce the interference between signals and improve the frequency use efficiency.

This application is based on the Japanese Patent Application No.2002-044169 filed on February 21, 2002, and the Japanese Patent Application No.2003-40209 filed on February 18, 2003.

### Industrial Applicability

The present invention is suitable for use in a base station apparatus and communication terminal apparatus provided with a radio communication apparatus.

## Claims

1. A radio communication apparatus comprising:
a first polarization antenna (102, 202) for communicating radio signals in first polarization; and
a second polarization antenna (103, 203) for communicating radio signals in second polarization at a speed of communication lower than a speed of communication of the radio signals in the first polarization.

2. The radio communication apparatus according to claim 1, further comprising:
a determining section (105) that determines whether or not a speed of communication of a transmission signal is more than a predetermined threshold; and
a switching section (104) which when the speed of communication is more than or equal to the predetermined threshold, outputs the transmission signal to the first polarization antenna (102), while when the speed of communication is not more than the predetermined threshold, outputting the transmission signal to the second polarization antenna (103).

3. The radio communication apparatus according to claim 1, further comprising:
a determining section (205) that determines whether or not a speed of communication of a received signal is more than a predetermined threshold;
a switching section (204) which when the speed of communication is more than or equal to the predetermined threshold, selects the received signal received in the first polarization antenna (202), while when the speed of communication is not more than the predetermined threshold, selecting the received signal received in the second polarization antenna (203); and
a receiving section (206) that converts the received signal selected in the switching section (204) into a baseband signal to perform reception processing.

4. The radio communication apparatus according to claim 1, further comprising:
a determining section (302) that determines whether or not a speed of communication of a transmission signal is more than a predetermined threshold;
a switching section (304) which when the speed of communication is more than or equal to the predetermined threshold, outputs the transmission signal to the first polarization antenna (102), while when the speed of communication is not more than the predetermined threshold, outputting the transmission signal to the second polarization antenna (103); and
a receiving section (303) that converts a received signal into a baseband signal to perform reception processing, wherein when the speed of communication is more than or equal to the predetermined threshold, the switching section (304) outputs a received signal received in the second polarization antenna (103) to the receiving section (303), while when the speed of communication is not more than the predetermined threshold, outputting a received signal received in the first polarization antenna (102) to the receiving section (303).

5. The radio communication apparatus according to claim 1, wherein the first polarization antenna (103) communicates a radio signal of speech communications in the first polarization, and the second polarization antenna (103) communicates a radio signal of data communications in the second polarization.

6. The radio communication apparatus according to claim 5, further comprising:
a determining section (502) that determines whether or not a communicated signal is of speech communications or data communications; and
a switching section (504) that outputs and receives a signal of speech communications to/from the first polarization antenna (102), while outputting and receiving a signal of data communications to/from the second polarization antenna (103).

7. The radio communication apparatus according to claim 1, further comprising:
a modulation section (702, 703) that performs modulation in a plurality of modulation schemes: and
a switching section (706) that outputs a transmission signal modulated in first modulation scheme to the first polarization antenna (102), while outputting to the second polarization antenna (103) a transmission signal modulated in second modulation scheme where a transmission amount per symbol is lower than in the first modulation scheme, wherein the first polarization antenna (102) transmits the transmission signal modulated in the first modulation scheme, while the second polarization antenna (103) transmits the transmission signal modulated in the second modulation scheme.

8. The radio communication apparatus according to claim 7, further comprising:
a determining section (105) that determines whether a signal to communicate is modulated in the first modulation scheme or the second modulation scheme; and
a switching section (706) which outputs a transmission signal modulated in the first modulation scheme to the first polarization antenna (102), receives a received signal modulated in the first modulation scheme from the second polarization antenna (103), outputs a transmission signal modulated in the second modulation scheme to the second polarization antenna (103), and receives a received signal modulated in the second modulation scheme from the first polarization antenna (102).

9. The radio communication apparatus according to claim 1, further comprising:
a demodulation section (804, 805) that demodulates a received signal according to one of a plurality of modulation schemes; and
a switching section (803) that receives a received signal modulated in first modulation scheme from the first polarization antenna (202) to output to the demodulation section (804, 805), while receiving from the second polarization antenna (203) a received signal modulated in second modulation scheme where a transmission amount per symbol is lower than in the first modulation scheme to output to the demodulation section (804, 805).

10. The radio communication apparatus according to claim 1, further comprising:
a determining section (205) that determines which the first polarization antenna (202) or the second polarization antenna (203) has higher reception sensitivity in a received signal;
a selecting section (1002) that selects a signal received in an antenna with higher reception sensitivity between the first polarization antenna (202) and the second polarization antenna (203); and
a radio section (206) that performs reception processing on the signal selected in the selecting section.

11. The radio communication apparatus according to claim 1, further comprising:
a direction-of-arrival estimating section (1105) that estimates directions of arrivals of a desired signal and an interfering signal from received signals received in the first polarization antenna (202) and the second polarization antenna (203); and
an antenna directivity control section (1106) that forms a directivity pattern for decreasing reception sensitivity of the interfering signal based on a result estimated in the direction-of-arrival estimating section (1105),
wherein the first polarization antenna (1102) and the second polarization antenna (1103) each have a plurality of antenna elements.

12. A radio communication method for performing radio communications at a plurality of speed of communications, wherein radio signals are communicated in first polarization using a first polarization antenna (102), while radio signals at a speed of communication lower than a speed of communication of the radio signals in the first polarization are communicated in second polarization different from the first polarization using a second polarization antenna (103).

## Patentansprüche

1. Funkübertragungsvorrichtung, die umfasst:
eine erste Polarisationsantenne (102, 202) zum Übertragen von Funksignalen in erster Polarisation; und
eine zweite Polarisationsantenne (103, 203) zum Übertragen von Funksignalen in zweiter Polarisation mit einer Übertragungsgeschwindigkeit, die niedriger ist als eine Übertragungsgeschwindigkeit der Funksignale in der ersten Polarisation.

2. Funkübertragungsvorrichtung nach Anspruch 1, die des Weiteren umfasst:
einen Feststellabschnitt (105), der feststellt, ob eine Übertragungsgeschwindigkeit eines Sendesignals über einem vorgegebenen Schwellenwert liegt oder nicht; und
einen Umschaltabschnitt (104), der, wenn die Übertragungsgeschwindigkeit über oder auf dem vorgegebenen Schwellenwert liegt, das Sendesignal an die erste Polarisationsantenne (102) ausgibt, während er, wenn die Übertragungsgeschwindigkeit nicht über dem vorgegebenen Schwellenwert liegt, das Sendesignal an die zweite Polarisationsantenne (103) ausgibt.

3. Funkübertragungsvorrichtung nach Anspruch 1, die des Weiteren umfasst:
einen Feststellabschnitt (205), der feststellt, ob eine Übertragungsgeschwindigkeit eines Empfangssignals über einem vorgegebenen Schwellenwert liegt oder nicht;
einen Umschaltabschnitt (204), der, wenn die Übertragungsgeschwindigkeit über oder auf dem vorgegebenen Schwellenwert liegt, das an der ersten Polarisationsantenne (202) empfangene Empfangssignal auswählt, während er, wenn die Übertragungsgeschwindigkeit nicht über dem vorgegebenen Schwellenwert liegt, das an der zweiten Polarisationsantenne (203) empfangene Empfangssignal auswählt; und
einen Empfangsabschnitt (206), der das in dem Umschaltabschnitt (204) ausgewählte Empfangssignal in ein Basisbandsignal umwandelt, um Empfangsverarbeitung durchzuführen.

4. Funkübertragungsvorrichtung nach Anspruch 1, die des Weiteren umfasst:
einen Feststellabschnitt (105), der feststellt, ob eine Übertragungsgeschwindigkeit eines Sendesignals über einem vorgegebenen Schwellenwert liegt oder nicht; und
einen Umschaltabschnitt (104), der, wenn die Übertragungsgeschwindigkeit über oder auf dem vorgegebenen Schwellenwert liegt, das Sendesignal an die erste Polarisationsantenne (102) ausgibt, während er, wenn die Übertragungsgeschwindigkeit nicht über dem vorgegebenen Schwellenwert liegt, das Sendesignal an die zweite Polarisationsantenne (103) ausgibt; und
einen Empfangsabschnitt (303), der ein Empfangssignal in ein Basisbandsignal umwandelt, um Empfangsverarbeitung durchzuführen, wobei, wenn die Übertragungsgeschwindigkeit über oder auf dem vorgegebenen Schwellenwert liegt, der Umschaltabschnitt (304) ein an der zweiten Polarisationsantenne (103) empfangenes Empfangssignal an den Empfangsabschnitt (303) ausgibt, während er, wenn die Übertragungsgeschwindigkeit nicht über dem vorgegebenen Schwellenwert liegt, ein an der ersten Polarisationsantenne (102) empfangenes Empfangssignal an den Empfangsabschnitt (303) ausgibt.

5. Funkübertragungsvorrichtung nach Anspruch 1, wobei die erste Polarisationsantenne (103) ein Funkssignal für Sprachübertragung in der ersten Polarisation überträgt und die zweite Polarisationsantenne (103) ein Funkssignal für Datenübertragung in der zweiten Polarisation überträgt.

6. Funkübertragungsvorrichtung nach Anspruch 5, die des Weiteren umfasst:
einen Feststellabschnitt (502), der feststellt, ob ein übertragenes Signal Sprachübertragung oder Datenübertragung dient; und
einen Umschaltabschnitt (504), der ein Signal für Sprachübertragung an die erste Polarisationsantenne (102) ausgibt oder von ihr empfängt und ein Signal für Datenübertragung an die zweite Polarisationsantenne (103) ausgibt, oder von ihr empfängt.

7. Funkübertragungsvorrichtung nach Anspruch 1, die des Weiteren umfasst:
einen Modulationsabschnitt (702, 703), der Modulation in einer Vielzahl von Modulationsschemata durchführt; und
einen Umschaltabschnitt (706), der an die erste Polarisationsantenne (102) ein Sendesignal ausgibt, das in einem ersten Modulationsschema moduliert ist, und an die zweite Polarisationsantenne (103) ein Sendesignal ausgibt, das in dem zweiten Modulationsschema moduliert ist, in dem ein Sendebetrag pro Symbol niedriger ist als in dem ersten Modulationsschema, wobei die erste Polarisationsantenne (102) das in dem ersten Modulationsschema modulierte Sendesignal sendet, während die zweite Polarisationsantenne (103) das in dem zweiten Modulationsschema modulierte Sendesignal sendet.

8. Funkübertragungsvorrichtung nach Anspruch 7, die des Weiteren umfasst:
einen Feststellabschnitt (105), der feststellt, ob ein zu übertragendes Signal in dem ersten Modulationsschema oder dem zweiten Modulationsschema moduliert ist; und
einen Umschaltabschnitt (706), der ein in dem ersten Modulationsschema moduliertes Sendesignal an die erste Polarisationsantenne (102) ausgibt, ein in dem ersten Modulationsschema moduliertes Empfangssignal von der zweiten Polarisationsantenne (103) empfängt, ein in dem zweiten Modulationsschema moduliertes Sendesignal an die zweite Polarisationsantenne (103) ausgibt und ein in dem zweiten Modulationsschema moduliertes Empfangssignal von der ersten Polarisationsantenne (102) empfängt.

9. Funkübertragungsvorrichtung nach Anspruch 1, die des Weiteren umfasst:
einen Demodulationsabschnitt (804, 805), der ein empfangenes Signal entsprechend einer Vielzahl von Modulationsschemata demoduliert; und
einen Umschaltabschnitt (803), der ein in einem ersten Modulationsschema moduliertes Empfangssignal von der ersten Polarisationsantenne (202) empfängt und es an den Demodulationsabschnitt (804, 805) ausgibt und von der zweiten Polarisationsantenne (203) ein Empfangssignal empfängt, das in einem zweiten Modulationsschema moduliert ist, in dem ein Sendebetrag pro Symbol niedriger ist als in dem ersten Modulationsschema, und es an den Demodulationsabschnitt (804, 805) ausgibt.

10. Funkübertragungsvorrichtung nach Anspruch 1, die des Weiteren umfasst:
einen Feststellabschnitt (205), der feststellt, ob die erste Polarisationsantenne (202) oder die zweite Polarisationsantenne (203) eine höhere Empfangsempfindlichkeit für ein Empfangssignal hat;
einen Auswählabschnitt (1002), der ein Signal auswählt, das an einer Antenne mit höherer Empfangsempfindlichkeit, d. h. der ersten Polarisationsantenne (202) oder der zweiten Polarisationsantenne (203) empfangen wird; und
einen Funkabschnitt (203), der Empfangsverarbeitung des in dem Auswählabschnitt ausgewählten Signals durchführt.

11. Funkübertragungsvorrichtung nach Anspruch 1, die des Weiteren umfasst:
einen Abschnitt (1105) zum Schätzen von Ankunftsrichtungen, der Ankunftsrichtungen eines gewünschten Signals und eines Störsignals aus an der ersten Polarisationsantenne (202) und der zweiten Polarisationsantenne (203) empfangenen Empfangssignalen schätzt; und
einen Abschnitt (1106) zum Steuern einer Antennen-Richtwirkung, der eine Richtcharakteristik zum Verringern von Empfangsempfindlichkeit für das Störsignal auf Basis eines in dem Abschnitt (1105) zum Schätzen der Ankunftsrichtung geschätzten Ergebnisses ausbildet,
wobei die erste Polarisationsantenne (1102) und die zweite Polarisationsantenne (1103) jeweils eine Vielzahl von Antennenelementen aufweisen.

12. Funkübertragungsverfahren zum Durchführen von Funkübertragungen mit einer Vielzahl von Übertragungsgeschwindigkeiten, wobei Funksignale in erster Polarisation unter Verwendung einer ersten Polarisationsantenne (102) übertragen werden und Funksignale mit einer Übertragungsgeschwindigkeit, die niedriger ist als eine Übertragungsgeschwindigkeit der Funksignale in der ersten Polarisation in zweiter Polarisation, die sich von der ersten Polarisation unterscheidet, unter Verwendung einer zweiten Polarisationsantenne (103) übertragen werden.

## Revendications

1. Appareil de radiocommunication comprenant :
une antenne à première polarisation (102, 202) pour communiquer des signaux radio dans une première polarisation ; et
une antenne à seconde polarisation (103, 203) pour communiquer des signaux radio dans une seconde polarisation ayant une vitesse de communication inférieure à la vitesse de communication des signaux radio dans la première polarisation.

2. Appareil de radiocommunication selon la revendication 1, comprenant en outre :
une section de détermination (105) qui détermine si la vitesse de communication d'un signal de transmission est ou non supérieure à un seuil prédéterminé ; et
une section de commutation (104) qui, lorsque la vitesse de communication est supérieure ou égale au seuil prédéterminé, délivre le signal de transmission en sortie à l'antenne à première polarisation (102), tandis que lorsque la vitesse de communication est inférieure au seuil prédéterminé, elle délivre le signal de transmission en sortie à l'antenne à seconde polarisation (103).

3. Appareil de radiocommunication selon la revendication 1, comprenant en outre :
une section de détermination (205) qui détermine si la vitesse de communication d'un signal reçu est ou non supérieure à un seuil prédéterminé ;
une section de commutation (204), qui, lorsque la vitesse de communication est supérieure ou égale au seuil prédéterminé, sélectionne le signal reçu par l'antenne à première polarisation (202), tandis que lorsque la vitesse de communication est inférieure au seuil prédéterminé, elle sélectionne le signal reçu par l'antenne à seconde polarisation (203) ; et
une section de réception (206) qui convertit le signal reçu sélectionné dans la section de commutation (204) en un signal en bande de base pour effectuer un traitement de réception.

4. Appareil de radiocommunication selon la revendication 1, comprenant en outre :
une section de détermination (302) qui détermine si la vitesse de communication d'un signal de transmission est ou non supérieure à un seuil prédéterminé ;
une section de commutation (304) qui, lorsque la vitesse de communication est supérieure ou égale au seuil prédéterminé, délivre le signal de transmission en sortie à l'antenne à première polarisation (102), tandis que lorsque la vitesse de communication est inférieure au seuil prédéterminé, elle délivre le signal de transmission en sortie à l'antenne à seconde polarisation (103) ; et
une section de réception (303) qui convertit un signal reçu en un signal en bande de base pour effectuer un traitement de réception, dans laquelle, lorsque la vitesse de communication est supérieure ou égale au seuil prédéterminé, la section de commutation (304) délivre en sortie à la section de réception (303) un signal reçu par l'antenne à seconde polarisation (103), tandis que lorsque la vitesse de communication est inférieure au seuil prédéterminé, elle délivre en sortie à la section de réception (303) un signal reçu par l'antenne à première polarisation (102).

5. Appareil de radiocommunication selon la revendication 1, dans lequel l'antenne à première polarisation (103) communique un signal radio de communication vocale dans la première polarisation et l'antenne à seconde polarisation (103) communique un signal radio de communication de données dans la seconde polarisation.

6. Appareil de radiocommunication selon la revendication 5, comprenant en outre:
une section de détermination (502) qui détermine si un signal communiqué est ou non constitué de communications vocales ou de communication de données; et
une section de commutation (504) qui délivre en sortie et reçoit un signal de communication vocale vers/depuis l'antenne à première polarisation (102), tandis qu'elle délivre en sortie et reçoit un signal de communication de données vers/depuis l'antenne à seconde polarisation (103).

7. Appareil de radiocommunication selon la revendication 1, comprenant en outre:
une section de modulation (702, 703) qui effectue une modulation dans une pluralité de systèmes de modulation ; et
une section de commutation (706) qui délivre en sortie à l'antenne à première polarisation (102) un signal de transmission modulé dans le premier système de modulation, tandis qu'elle délivre en sortie à l'antenne à seconde polarisation (103) un signal de transmission modulé dans le second système de modulation, lorsque la quantité de transmission par symbole est inférieure à celle du premier système de modulation, dans lequel l'antenne à première polarisation (102) transmet le signal de transmission modulé dans le premier système de modulation, tandis que l'antenne à seconde polarisation (103) transmet le signal de transmission modulé dans le second système de modulation.

8. Appareil de radiocommunication selon la revendication 7, comprenant en outre:
une section de détermination (105) qui détermine si un signal à communiquer est modulé dans le premier système de modulation ou le second système de modulation ; et
une section de commutation (706) qui délivre en sortie à l'antenne à première polarisation (102) un signal de transmission modulé dans le premier système de modulation, reçoit de l'antenne à seconde polarisation (103) un signal reçu modulé dans le premier système de modulation, délivre en sortie à l'antenne à seconde polarisation (103) un signal de transmission modulé dans le second système de modulation, et reçoit de l'antenne à première polarisation (102) un signal reçu modulé dans le second système de modulation.

9. Appareil de radiocommunication selon la revendication 1, comprenant en outre:
une section de démodulation (804, 805) qui démodule un signal reçu selon un système parmi une pluralité de systèmes de modulation ; et
une section de commutation (803) qui reçoit de l'antenne à première polarisation (202) un signal reçu modulé dans un premier système de modulation, pour le délivrer en sortie à la section de démodulation (804, 805), tandis qu'elle reçoit de l'antenne à seconde polarisation (203) un signal reçu modulé dans le second système de modulation, lorsque la quantité de transmission par symbole est inférieure à celle du premier système de modulation, pour le délivrer en sortie à la section de démodulation (804, 805).

10. Appareil de radiocommunication selon la revendication 1, comprenant en outre:
une section de détermination (205) qui détermine laquelle de l'antenne à première polarisation (202) ou de l'antenne à seconde polarisation (203) présente une sensibilité de réception supérieure à un signal reçu ;
une section de sélection (1002) qui sélectionne un signal reçu dans une antenne avec une sensibilité de réception supérieure entre l'antenne à première polarisation (202) et l'antenne à seconde polarisation (203) ; et
une section radio (206) qui effectue un traitement de réception sur le signal sélectionné dans la section de sélection.

11. Appareil de radiocommunication selon la revendication 1, comprenant en outre:
une section d'estimation de direction d'arrivée (1105) qui estime les directions d'arrivée d'un signal désiré et d'un signal brouilleur d'après les signaux reçus par l'antenne à première polarisation (202) et l'antenne à seconde polarisation (203) ; et
une section de commande de directivité d'antenne (1106) qui forment un diagramme de directivité pour diminuer la sensibilité de réception du signal brouilleur en se basant sur un résultat estimé dans la section d'estimation de direction d'arrivée (1105),
dans lequel l'antenne à première polarisation (1102) et l'antenne à seconde polarisation (1103) comportent chacune une pluralité d'éléments d'antenne.

12. Procédé de radiocommunication pour effectuer des communications radio à une pluralité de vitesses de communication, dans lequel les signaux radio sont communiqués dans une première polarisation en utilisant une antenne à première polarisation (102) tandis que les signaux radio ayant une vitesse de communication inférieure à la vitesse de communication des signaux radio dans la première polarisation sont communiqués dans une seconde polarisation différente de la première polarisation en utilisant une antenne à seconde polarisation (103).
